Europäisches Patentamt

European Patent Office

Office européen des brevets

(11) Publication number: **0 437 608 B1**

# EUROPEAN PATENT SPECIFICATION

(45) Date of publication of patent specification: **28.12.94** (51) Int. Cl.⁵: **B01J 23/58**, C01B 3/04, C10K 1/34

(21) Application number: **88909225.0**

(22) Date of filing: **21.10.88**

(86) International application number:
**PCT/JP88/01075**

(87) International publication number:
**WO 89/04210 (18.05.89 89/11)**

(54) **PROCESS FOR DECOMPOSING AMMONIA.**

(30) Priority: **30.10.87 JP 277156/87**

(43) Date of publication of application:
**24.07.91 Bulletin 91/30**

(45) Publication of the grant of the patent:
**28.12.94 Bulletin 94/52**

(84) Designated Contracting States:
**DE GB**

(56) References cited:
**DE-A- 2 706 182**
**FR-A- 1 506 009**
**GB-A- 2 034 194**
**US-A- 4 568 789**

(73) Proprietor: **NKK CORPORATION**
**1-2, Marunouchi 1-chome**
**Chiyoda-ku**
**Tokyo 100 (JP)**

(72) Inventor: **SHIKADA, Tsutomu**
**NKK Corporation-nai**
**1-2, Marunouchi 1-chome**

**Chiyoda-ku**
**Tokyo 100 (JP)**
Inventor: **ASANUMA, Minoru**
**NKK Corporation-nai**
**1-2, Marunouchi 1-chome**
**Chiyoda-ku**
**Tokyo 100 (JP)**
Inventor: **IKARIYA, Takao**
**NKK Corporation-nai**
**1-2, Marunouchi 1-chome**
**Chiyoda-ku**
**Tokyo 100 (JP)**

(74) Representative: **Zumstein, Fritz, Dr.**
**Patentanwälte,**
**Dr. F. Zumstein,**
**Dipl.-Ing. F. Klingseisen,**
**Bräuhausstrasse 4**
**D-80331 München (DE)**

**Description**

The present invention relates to a catalyzer for decomposing ammonia, which has been recovered from a coke oven gas, into hydrogen and nitrogen at low temperatures as 400 to 500°C.

A gas generated in a coke oven contains ammonia of 6 to 10 g/Nm$^3$, and it must be removed since it causes corrosion in pipings of the coke oven gas (called as "COG" hereinafter) and generates NOx at combustion of COG. As methods of removing ammonia from COG, in general COG is washed with dilute sulfuric acid and ammonium sulfate is recovered. However, this method is very poor in payability, because fertilizers of ammonium sulfate have been very little required nowadays, and a market price has largely fallen accordingly, and the treatment of ammonia by the production of ammonium sulfate is not valuable industrially. Presently, the production of ammonium sulfate has been cut down, and there are other ammonia treatments, for example, Phosam method which produces liquid ammonia of high purity; Koppers method which separates ammonia and burns it directly; or Carl Still method which burns ammonia under the presence of a catalyzer. But, since these methods are not perfectly satisfactory, either, in view of economical treatments, various improvements have been attempted, and at the same time new processes of ammonia treatments have been developed vigorously.

Under these circumstances, the inventors developed and proposed a treating method of ammonia recovered from COG, which comprised burning ammonia catalytically in the presence of air to change it into nitrogen and water, decomposing it catalytically by the heat caused by said burning, and recovering hydrogen.

There have been up to now sumbitted many reports with respect to catalyzers useful for ammonia decomposition. For example, "CATALYSIS Science and Technology", vol. 1, page 118 (1981) describes useful catalysis elements such as molybdenum, tungsten, rhenium, iron, ruthenium, cobalt, rhodium, nickel, platinum, copper and vanadium.

FR-A-506 009 discloses a catalyst wherein a basic compound is added to ruthenium supported on alumina.

DE-A-2 706 182 discloses a catalyst bed for the decomposition of ammonia consisting of a mixture of a catalyst for said decomposition and of catalytically inert granules. As catalyst platinum, rhodium, ruthenium and/or alloys thereof supported on spherical particles of alumina, silica, zeolite, kaolin or silicon carbide are disclosed, the inert granules consisting of alumina, silica, zeolite, kaolin, silicon carbide, catalytically inert metals and/or metal oxides.

The ammonium decomposition has been utilized industrially in the production of an atmospheric gas to be used for bright annealing of stainless steel or nickel steels and the catalyzers thereof are $Fe_2O_3$-$Al_2O_3$, $NiO$-$SiO_2 \cdot Al_2O_3$ and $Pt$-$Al_2O_3$. These catalyzers are used at a space velocity of 500 to 1000ml/ml·h and at temperatures of 500 to 900°C, substantially 700 to 1200°C. But, foregoing catalyzers such as $Fe_2O_3$-$Al_2O_3$, $NiO$-$SiO_2 \cdot Al_2O_3$, $Pt$-$Al_2O_3$ and $Ru$-$Al_2O_3$ have problems as mentioned below, requiring high temperatures like 700 to 1200°C for decomposing ammonia perfectly:

1) Heat resistant materials are required for reactors.
2) Much energy is consumed for maintaining the reaction temperature high.

The present invention has been developed for settling these problems about the prior art, and is to propose a catalyzer for decomposing ammonia into hydrogen and nitrogen at low temperature ranges.

The inventors have succeeded in making an ammonia decomposition catalyzer which may decompose ammonia at ranges of low temperature of not more than 500°C and change it into nitrogen and hydrogen in a process which combines a catalytic combustion of ammonia and a catalytic decomposition of ammonia utilizing the waste heat generated by said catalytic combustion.

It has been known that ruthenium is useful for the decomposition reaction of ammonia, for example, "J. Am. Chem. Soc." refers to $Ru$-$Al_2O_3$ in vol. 76, page 4201 (1954), and "Trans. Faraday Soc." describes a ruthenium film in vol. 56, page 144 (1960). In view of these matters, a characterizing feature of the invention consists in that basic compounds are contained in the catalyzers, whereby the ammonia decomposition activity of ruthenium is improved considerably, and this tendency is remarkable at low temperatures of not more than 500°C.

The present catalyzer will be prepared by two methods of
(1) adding the basic compound as a third element to $Ru$-$Al_2O_3$, and
(2) employing the basic compound as a carrier.

A first reference will be made to the method (1). The basic compounds referred to herein are oxides of alkaline metals such as $Li_2O$, $Na_2O$, $K_2O$, $Rb_2O$ or $Cs_2O$, carbonates hydroxides or nitrates of alkaline metals, acetates of alkaline metals, oxides of alkaline earth metals such as $MgO$, $CaO$, $SrO$ or $BaO$, carbonates, hydroxides or nitrates of alkaline earth metals, and acetates of alkaline earth metals. The basic compound may be added before or after ruthenium as the active metal is supported on the alumina carrier, or when ruthenium is supported on it. When ruthenium is supported on alumina, available ruthenium compounds are, for example, water soluble such as ruthenium chloride, ruthenium nitrate or ruthenium acetate, or soluble in an organic solvent such as ruthenium carbonyl ($Ru_3(CO)_{12}$). Ordinary impregnation methods may be utilized to load the basic compound and ruthenium.

The amount of ruthenium in the catalyzer is 0.1 to 2.0 wt% and that of the basic compound is 1 to 20 wt% calculated as oxide.

The basic compounds used as the carrier in the method (2) are oxides, carbonates of alkaline earth metals, or mixed oxide compound of alumina, silica gel, or titania together with said oxides and carbonates.

The composition of the catalyzer prepared as stated above is dried in air at the temperature of 90 to 150°C for 12 to 36 hours. If required, it may be calcinated thereafter by an ordinary process. It is preferable that the calcination is performed by heating at a temperature of 400 to 600°C for 1 to 10 hours in nitrogen or air.

The catalyzer composition does not require a pre-treatment as a reduction before performing the ammonia decomposition, because the catalyzer is reduced gradually due to hydrogen generated by the ammonia decomposition. If a decomposition activity more stable than at the beginning of the reaction is required, the composition is heat-treated, e.g., in a steam of hydrogen at a temperature of more than 200°C, preferably more than 300°C for 1 to 5 hours.

Makeup examinations were taken as follows with respect to the present catalayzers, and will be shown together with results of experiments.

(1) Preparation of the catalyzer

Ruthenium trichloride ($RuCl_3 \cdot 3H_2O$) of 1.03g and potassium nitrate of 10.7g were dissolved in water of about 200 ml, and alumina of 94.5g granulated into 20 to 40 meshes (DC-2282 made by Dia-catalyst) was supplied thereto, evaporated and dried. Subsequently, the above treated substance was dried in the air at the temperature of 120°C for 24 hours, and calcinated in the air at a temperature of 500°C for 4 hours, and further treated in a steam of hydrogen at a temperature of 400°C for 3 hours to obtain a catalyzer (1).

Alumina of 99.5g was used without potassium nitrate in the same manner as in the preparation of catalyzer (1) to obtain the catalyzer of comparative example (a).

A catalyzer ($Ru-K_2O-Al_2O_3$ = 0.5 : 2 : 97.5 and 0.5 : 10 : 89.5) with a content of potassium different from that of catalyzer (1) was prepared in the same process as catalyzer (1) to obtain catalyzers (2) and (3).

Catalyzers ($Ru-K_2O-Al_2O_3$ = 0.1 : 5 : 94.9 and 2 : 5 : 93) with a content of ruthenium different from that of catalyzer (1) were prepared in the same process as catalyzer (1) to obtain catalyzers (4) and (5).

Catalyzers ($Ru-Li_2O-Al_2O_3$ = 0.5 : 5 : 94.5, $Ru-Na_2O-Al_2O_3$ = 0.5 : 5 : 94.5 and $Ru-Cs_2O-Al_2O_3$ = 0.5 : 5 : 94.5) with sorts of alkaline metal different from that of catalyzer (1) were prepared in the same process as catalyzer (1) to obtain catalyzers (6), (7) and (8).

Calcium nitrate or barium nitrate ($Ru-CaO-Al_2O_3$ = 0.5 : 5 : 94.5 or $Ru-BaO-Al_2O_3$ = 0.5 : 5 : 94.5) were used in place of potassium nitrate in the same process as for catalyzer (1) to obtain catalyzers (9) and (10).

Magnesium oxide (made by Kanto Chemicals, Special grade chemical) was used instead of alumina in the same process as for catalyzer (1) to obtain catalyzer (11) ($Ru-K_2O-MgO$ = 0.5 : 5 : 94.5).

Iron nitrate ($Fe(NO_3)_3 \cdot 9H_2O$) of 20.3g was dissolved in water of about 200 ml, and alumina of 97.2g was supplied thereto to prepare in the same process as for catalyzer (1) the catalyzer of comparative example (b).

Nickel nitrate ($Ni(NO_3)_3 \cdot 6H_2O$) of 99.1g was dissolved in water of about 200ml, and silica alumina of 80.0g (made by Nikki Chemicals · N631L) was supplied thereto to prepare in the same process as for catalyzer (1) the catalyzer of comparative example (c).

Chloroplatinic acid ($H_2PtCl_6 \cdot 6H_2O$) of 0.530g was dissolved in water of about 200ml, and alumina of 99.5g was supplied thereto to prepare in the same process as for catalyzer (1) the catalyzer of comparative example (e).

(2) The decomposition of ammonia

Each of the above stated catalyzers was placed in a tubular reactor made of quartz, and a gas mixture of ammonia and helium with a $NH_3$/He ratio of 1.0 was supplied at a prescribed reaction temperature and at a flow velocity of 100 ml/min under atmospheric pressure and reacted. The space velocity was 1000 ml/ml·h on the basis of ammonia.

3

Reaction products and unreacted ammonia recovered by the above operations were analyzed by a gas chromatograph. The results will be shown in the following table.

The reaction products were nitrogen and hydrogen only.

The formation rate of nitrogen was 0.5 times and that of hydrogen was 1.5 times of the decomposition rate of ammonia (the number of moles ammonia converted per unit volume of catalyzer and unit time).

As apparent from said table the catalyzers (1) to (11) exhibit a high activity for the decomposition of ammonia and remarkable effects at a low temperature of not more than 500 ° C in comparison with the comparative examples (a), (b), (c) and (d).

Having explained heretofore, the ammonia decomposition catalyzers according to the invention give high ammonia decomposition activities at low temperatures of not more than 500 ° C and remarkable effects.

| No. | Catalyzers ( ): Weight Ratio | Ammonia conversion (%) at reaction temperatures | | | | | |
|---|---|---|---|---|---|---|---|
| | | 350°C | 380°C | 400°C | 450°C | 500°C | 550°C |
| Catalyzer (1) | $Ru-K_2O-Aℓ_2O_3$ (0.5 : 5 : 94.5) | 31.8 | 59.0 | 78.0 | 98.2 | 100 | 100 |
| Comparative Example (a) | $Ru-Aℓ_2O_3$ (0.5 : 99.5) | — | — | 21.1 | 57.5 | 83.5 | 91.2 |
| Catalyzer (2) | $Ru-K_2O-Aℓ_2O_3$ (0.5 : 2 : 97.5) | — | 23.6 | 38.2 | 80.2 | 92.6 | 100 |
| " (3) | $Ru-K_2O-Aℓ_2O_3$ (0.5 : 10 : 89.5) | 29.2 | 50.1 | 69.5 | 89.7 | 100 | 100 |
| " (4) | $Ru-K_2O-Aℓ_2O_3$ (0.1 : 5 : 94.9) | — | 32.0 | 43.4 | 75.3 | 94.7 | 100 |
| " (5) | $Ru-K_2O-Aℓ_2O_3$ ( 2 : 5 : 93) | 31.3 | 55.3 | 74.8 | 91.3 | 100 | 100 |
| " (6) | $Ru-Li_2O-Aℓ_2O_3$ (0.5 : 5 : 94.5) | — | — | 24.4 | 59.5 | 88.9 | 100 |
| " (7) | $Ru-Na_2O-Aℓ_2O_3$ (0.5 : 5 : 94.5) | 21.8 | 43.6 | 64.1 | 100 | 100 | 100 |
| " (8) | $Ru-Cs_2O-Aℓ_2O_3$ (0.5 : 5 : 94.5) | — | 21.0 | 37.0 | 77.2 | 94.3 | 100 |
| " (9) | $Ru-CaO-Aℓ_2O_3$ (0.5 : 5 : 94.5) | — | 21.1 | 31.9 | 77.2 | 100 | 100 |
| " (10) | $Ru-BaO-Aℓ_2O_3$ (0.5 : 5 : 94.5) | — | 28.0 | 40.7 | 77.0 | 88.0 | 100 |
| " (11) | $Ru-K_2O-MgO$ (0.5 : 5 : 94.5) | 22.9 | 42.7 | 62.3 | 100 | 100 | 100 |
| Comparative Example (b) | $Fe-Aℓ_2O_3$ (2.8 : 97.2) | — | — | 1.2 | — | 5.4 | — |
| " (c) | $Ni-SiO_2·Aℓ_2O_3$ (20 : 80) | — | 7.4 | 19.9 | 47.7 | 83.4 | 95.7 |
| " (d) | $Pt-Aℓ_2O_3$ (0.5 : 99.5) | — | — | 1.1 | — | 1.8 | 1.9 |

As the ammonia decomposition catalyzers of the invention can decompose ammonia into hydrogen and nitrogen effectively, they decompose ammonia recovered from COG, whereby it is possible to produce an atmospheric gas to be used to the bright annealing of stainless steels and nickel steels by means of hydrogen gas obtained by said decomposition.

5

## EP 0 437 608 B1

## Claims

1. A process for decomposing ammonia wherein a catalyzer is utilized, said catalyzer consisting essentially of a mixture of a basic compound in an amount of 1 to 20 weight percent and ruthenium in an amount of 0.1 to 2.0 weight percent which is impregnated into an alumina carrier and then calcinated and reduced, wherein the ammonia is decomposed at a temperature of not more than 500°C, said basic compound being an oxide, a carbonate, a hydroxide, a nitrate or an acetate of an alkali metal or an alkaline earth metal.

2. The process of claim 1, wherein the basic compound is added after impregnating ruthenium.

3. The process of claim 1, wherein the basic compound is added when said ruthenium is being impregnated.

4. The process of claim 3, wherein the ruthenium is selected from the group consisting of ruthenium chloride, ruthenium nitrate, ruthenium acetate and ruthenium carbonyl.

5. The process of claim 1, wherein the carrier comprises oxides or carbonates of alkaline earth metals, or mixed oxide compounds of alumina, silica gel, or titania together with said oxides and carbonate.

6. The process of claim 1, wherein the catalyzer is dried in air at a temperature of 90°C to 150°C for a period of from 12 to 36 hours.

## Patentansprüche

1. Verfahren zur Zersetzung von Ammoniak, worin ein Katalysator verwendet wird, wobei dieser Katalysator im wesentlichen aus einer Mischung einer basischen Verbindung in einer Menge von 1 bis 20 Gew.-% und Ruthenium in einer Menge von 0,1 bis 2,0 Gew.-% besteht, welche in einem Aluminiumoxidträger imprägniert und hiernach calciniert und reduziert wird, und worin das Ammoniak bei einer Temperatur von nicht mehr als 500°C zersetzt wird, wobei die basische Verbindung ein Oxid, ein Carbonat, ein Hydroxid, ein Nitrat oder ein Acetat eines Alkalimetalls oder Erdalkalimetalls ist.

2. Verfahren gemäß Anspruch 1, worin die basische Verbindung nach dem Imprägnieren des Rutheniums zugesetzt wird.

3. Verfahren gemäß Anspruch 1, worin die basische Verbindung zugesetzt wird, während das Ruthenium imprägniert wird.

4. Verfahren gemäß Anspruch 3, worin das Ruthenium ausgewählt wird unter Rutheniumchlorid, Rutheniumnitrat, Rutheniumacetat und Rutheniumcarbonyl.

5. Verfahren gemäß Anspruch 1, worin der Träger Oxide oder Carbonate von Erdalkalimetallen oder gemischte Oxidverbindungen von Aluminiumoxid, Silicagel oder Titanoxid zusammen mit diesen Oxiden und Carbonat umfaßt.

6. Verfahren gemäß Anspruch 1, worin der Katalysator an Luft bei einer Temperatur von 90 bis 150°C während eines Zeitraums von 12 bis 36 Stunden getrocknet wird.

## Revendications

1. Procédé pour la décomposition de l'ammoniaque, dans lequel on fait appel à un catalyseur, ce catalyseur étant essentiellement constitué par un mélange d'un composé basique dans une quantité de 1 à 20% en poids, et de ruthénium dans une quantité de 0.1 à 2.0% en poids, qui est imprégné dans un support d'alumine puis calciné et réduit, procédé dans lequel l'ammoniaque est décomposé à une température ne dépassant pas 500°C, ce composé basique étant un oxyde, un carbonate, un hydroxyde, un nitrate ou un acétate d'un métal alcalin ou d'un métal alcalino-terreux.

2. Procédé selon la revendication 1, dans lequel le composé basique est ajouté après imprégnation de ruthénium.

3. Procédé selon la revendication 1, dans lequel le composé basique est ajouté au moment où l'on imprègne le ruthénium.

4. Procédé selon la revendication 3, dans lequel le ruthénium est choisi dans le groupe constitué par du chlorure de ruthénium, du nitrate de ruthénium, de l'acétate de ruthénium et du carbonyle de ruthénium.

5. Procédé selon la revendication 1, dans lequel le support comprend des oxydes ou des carbonates de métaux alcalino-terreux, ou des composés oxydes mixtes d'alumine, gel de silice, ou dioxyde de titane conjointement avec les oxydes et le carbonate.

6. Procédé selon la revendication 1, dans lequel le catalyseur est séché à l'air à une température de 90°C jusqu'à 150°C pendant une durée allant de 12 à 36 heures.